# EUROPÄISCHE PATENTSCHRIFT

(11) **EP 2 646 261 B1**
(45) Veröffentlichungstag und Bekanntmachung des Hinweises auf die Patenterteilung: **04.01.2017**
(21) Anmeldenummer: 11761373.7
(22) Anmeldetag: 27.09.2011
(51) Int. Cl.: B60C 9/20

(54) **NUTZFAHRZEUGLUFTREIFEN**
COMMERCIAL VEHICLE PNEUMATIC TYRE
PNEUMATIQUE POUR VÉHICULES UTILITAIRES

(30) Priorität: 03.12.2010 DE 102010060993
(43) Veröffentlichungstag der Anmeldung: 09.10.2013
(73) Patentinhaber: Continental Reifen Deutschland GmbH, 30165 Hannover (DE)
(72) Erfinder: PETERS, Klaus, 31303 Burgdorf (DE)
(74) Vertreter: Preusser, Andrea
(86) Internationale Anmeldenummer: PCT/EP2011/066698
(87) Internationale Veröffentlichungsnummer: WO 2012/072303

(56) Entgegenhaltungen:
- EP-A2- 0 738 615
- DE-A1- 3 407 874
- US-A- 4 742 858
- US-A- 5 648 153

## Beschreibung

Die Erfindung betrifft einen Nutzfahrzeugluftreifen in Radialbauart mit einer Karkasse und einem Gürtel, welcher zwei Gürtellagen mit Festigkeitsträgern aus Stahlkord in Funktion von sogenannten Arbeitslagen aufweist, wobei die Stahlkorde jeder Arbeitslage mit einem bestimmten Stahlkordabstand parallel zueinander verlaufen, wobei die Neigung der Stahlkorde in Bezug zur Umfangsrichtung der radial inneren Arbeitslage gegenläufig zur Neigung der Stahlkorde der radial äußeren Arbeitslage ist und wobei die Stahlkorde der beiden Arbeitslagen einen Winkel α zwischen 15° und 30° mit der Umfangsrichtung einschließen.

Nutzfahrzeugreifen mit einem Gürtel, welcher zwei Arbeitslagen aufweist, sind dem Fachmann bekannt. Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von den sogenannten "Arbeitslagen" angeordnet, wobei die 3. Gürtellage in der Regel schmaler als die 2. Gürtellage ist. Die Festigkeitsträger der beiden Arbeitslagen weisen den gleichen Abstand von üblicherweise 0,4 bis 1,2mm auf. Die radial äußere Arbeitslage wird von der 4. Gürtellage, der sogenannten "Schutzlage", abgedeckt. Der Abstand der Stahlkorde je 100mm Gürtelbreite ist wie folgt definiert: (100mm - Anzahl der Stahlkorde * Durchmesser eines Stahlkordes) / Anzahl der Stahlkorde.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen einen gleichen Winkel zwischen 15° und 30° in Bezug auf die Reifenumfangsrichtung auf, wobei die Stahlkorde der einen Arbeitslage gegenläufig zu den Stahlkorde der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte im Gürtel. Die 4. Gürtellage weist Stahlkorde auf, welche einen Winkel zwischen 15° und 30° mit der Umfangsrichtung einschließen und hat die Funktion einer Schutzlage.

Damit die Arbeitslagen im Betriebszustand des Reifens hohe Scher- und Zugkräfte aufnehmen können, weisen diese durch eine hohe Stahlkorddichte einen hohen Stahlanteil auf. Hierdurch ist die Belastung je Stahlkord verringert, so dass der Gürtel auch lokalen Spitzenbelastungen standhalten kann. Eine hohe Stahlkorddichte bedeutet, dass die Stahlkorde in einem geringen Abstand zueinander angeordnet sind. Es hat sich gezeigt, dass dieser geringe Abstand der Stahlkorde zueinander jedoch die Gürtelkantenhaltbarkeit herabsetzen kann, weil die im Gummimaterial zwischen den eng zueinander angeordneten Stahlkorden auftretenden Spannungen sehr hohe Werte erreichen, wodurch unerwünschte Rissbildungen initiiert werden können, welche die Haltbarkeit des Reifen herabsetzen können. Es hat sich gezeigt, dass diese Rissbildungen an der schmalen, radial äußeren Arbeitslage initiiert werden.

Es sind Fahrzeugluftreifen bekannt, deren Gürtel zwei Lagen mit unterschiedlicher Stahlkorddichte aufweist.

In der US 4,742,858 ist ein Nutzfahrzeugluftreifen mit einem Gürtel offenbart, wobei der Gürtel vier Gürtellagen mit Festigkeitsträgern aus Stahlkord aufweist, wobei die Stahlkorde jeder Lage jeweils parallel zueinander verlaufen und wobei die Stahlkorde der Lagen einen kleinen Winkel mit der Umfangsrichtung einschließen. Eine radial äußere dieser Lagen weist Stahlkorde der Struktur 3 + 9 + 15 x 0,23 + 1 mit 7,9 Stahlkorden pro 25 mm auf, wobei eine radial innere dieser Lagen Stahlkorde der Struktur 3 x 0,20 + 6 x 0,38 mit 13 Stahlkorden pro 25 mm aufweist. Die beiden Lagen weisen somit eine unterschiedliche Stahlkorddichte auf.

Die EP 0 738 615 A2 offenbart Fahrzeugluftreifen jeweils mit einem Gürtel umfassend zwei Gürtellagen mit unterschiedlicher Stahlkorddichte.

Die US 5,648,153 offenbart Nutzfahrzeugreifen jeweils mit einem Gürtel aufweisend vier Lagen. Die zwei Arbeitslagen, d.h. die von radial innen gesehen zweite und dritte Lage weisen dabei die gleiche Stahlkorddichte auf, welche sich von der Stahlkorddichte der da dazu radial außenseitig angeordneten vierten Lage unterscheidet. Die beiden Arbeitslagen werden gleich behandelt, so dass man hinsichtlich Gürtelkantenhaltbarkeit auf der einen Seite und Abrieb bzw. Festigkeit auf der anderen Seite immer einen Kompromiss eingehen muss.

Es ist die Aufgabe der Erfindung einen Nutzfahrzeugreifen bereitzustellen, dessen Gürtelkantenhaltbarkeit bei dennoch guten Abriebs- und Festigkeitseigenschaften verbessert ist.

Die Aufgabe wird gelöst, indem die radial äußere Arbeitslage einen Stahlkordabstand von etwa 1,2 bis 1,4mm und die radial innere Arbeitslage (8) einen Stahlkordabstand (4) zwischen 0,5mm und 0,8mm aufweist und indem der Unterschied des Stahlkordabstandes zwischen der radial äußeren Arbeitslage und der radial inneren Arbeitslage > 0,2mm ist, wobei der Stahlkordabstand je 100mm Gürtelbreite wie folgt definiert ist: (100mm - Anzahl der Stahlkorde * Durchmesser eines Stahlkordes) / Anzahl der Stahlkorde.

Die beiden Arbeitslagen weisen unterschiedliche Stahlkordabstände auf. In der schmaleren radial äußeren Arbeitslage ist der Stahlkordabstand größer, die Anordnung der Stahlkorde ist somit weniger dicht gewählt, als in der breiteren radial inneren Arbeitslage. Hierdurch ist erreicht, dass die im Gummimaterial auftretenden Spannungen zwischen den Stahlkorden nicht mehr so hohe, sondern niedrigere Werte erreichen, wodurch Rissinitiierungen verringert bzw. gänzlich vermieden werden können. Die Gürtelkantenhaltbarkeit ist verbessert. Die Abriebs- und Festigkeitseigenschaften des NFZ-Reifens können dennoch auf einem hohen Niveau gehalten werden, weil alle anderen Gürtellagen hinsichtlich Abrieb und Festigkeit optimiert werden können (d.h. unter Verwendung von viel Stahl und somit mit geringen Kordabständen), ohne dass dies einen negativen Einfluss auf die Gürtelkantenhaltbarkeit hat.

Man gewinnt also einen Freiheitsgrad und optimiert die radial äußere Arbeitslage bzgl. Gürtelkantenhaltbarkeit. Alle anderen Lagen können bzgl. Abrieb und Festigkeit optimiert werden.

Es hat sich gezeigt, dass ein NFZ-Reifen mit einer Gürtelkonstruktion mit vorgenannten Arbeitslagen in Bezug auf die Gürtelkantenhaltbarkeit besonders haltbar ist und gute Abriebs- und Festigkeitseigenschaften aufweist.

In einer weiteren vorteilhaften Ausgestaltung der Erfindung ist vorgesehen, dass zwischen der Karkasse und der radial inneren Arbeitslage eine weitere Gürtellage mit Festigkeitsträgern aus Stahlkord in Funktion einer Sperrlage angeordnet ist, wobei die Festigkeitsträger dieser Sperrlage mit der Umfangsrichtung einen Winkel β > 45° einschließen. Diese Sperrlage behindert die darüber liegenden Gürtellagen in deren Lateralbewegung und schützt so die Karkasse vor zu hohen Druckkräften und minimiert ebenso die Scherkräfte an den Gürtelkanten. Die Verwendung der sog. Sperrlage als Solcher ist dem Fachmann bekannt.

In einer weiteren vorteilhaften Ausgestaltung der Erfindung ist vorgesehen, dass radial außen in Bezug auf die radial äußere Arbeitslage eine zusätzliche Gürtellage in Funktion einer sogenannten Schutzlage angeordnet ist. Diese schützt die Arbeitslagen vor Verletzungen von außen.

In einer weiteren vorteilhaften Ausgestaltung der Erfindung ist vorgesehen, dass zwischen den Arbeitslagen eine weitere Gürtellage angeordnet ist, deren Festigkeitsträger aus Stahlkord in etwa 0° mit der Umfangsrichtung einschließen. Diese 0°-Lage weist eine sehr hohe Steifigkeit in Umfangsrichtung auf und reduziert somit die Gürtelbewegungen in dieser Richtung. Das hat zur Folge, dass damit die Scherspannungen zwischen den weiteren Gürtellagen gesenkt werden können.

Weitere Merkmale, Vorteile und Einzelheiten der Erfindung werden anhand der Zeichnungen, welche schematische Ausführungsbeispiele darstellen, näher erläutert. Es zeigen die:
Fig. 1 einen Teilquerschnitt durch die eine Hälfte eines NFZ-Luftreifens im Bereich des Gürtels und des Laufstreifens;
Fig.2 eine Aufsicht auf einen NFZ-Gürtels des Luftreifens der Fig.1 mit sichtbarem Verlauf der Festigkeitsträger;
Fig.3 eine Gürtellagenanordnung eines NFZ-Luftreifens im Querschnitt;
Fig.4 eine weitere Gürtellagenanordnung eines NFZ-Luftreifens im Querschnitt;
Fig.5 eine wiederum weitere Gürtellagenanordnung eines NFZ-Luftreifens im Querschnitt;
Fig.6 eine wiederum weitere Gürtellagenanordnung eines NFZ-Luftreifens im Querschnitt;
Fig.7 eine wiederum weitere Gürtellagenanordnung eines NFZ-Luftreifens im Querschnitt.

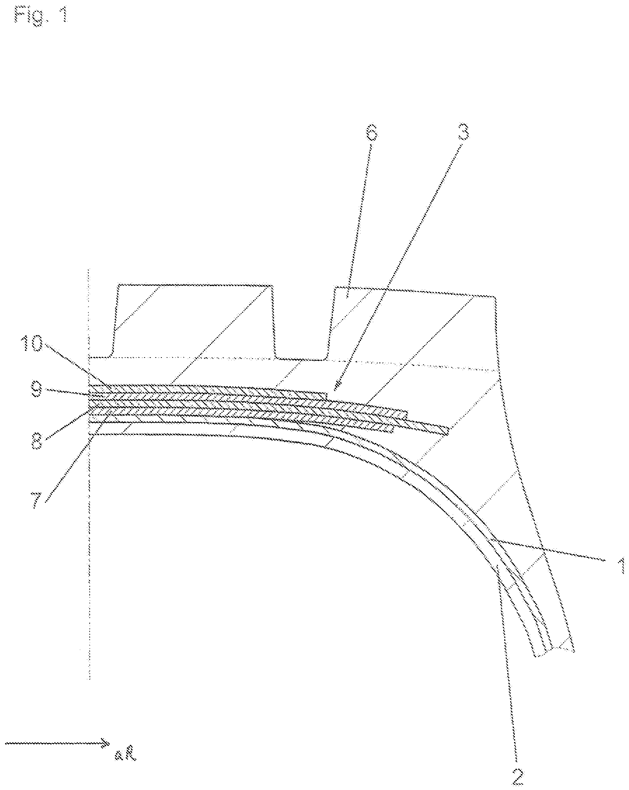

Fig. 1 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlkorden als Festigkeitsträgern, einer luftdichten Innenschicht 2, einem mehrlagigen Gürtel 3, und einem profilierten Laufstreifen 6.

Der Gürtel 3 weist vier Gürtellagen 7, 8, 9 und 10 auf, wobei die vierte, radial äußerste Gürtellage 10 die geringste Breite von allen Lagen aufweist und die sogenannte Schutzlage bildet. Die erste, radial innerste Gürtellage 7 ist die sogenannte Triangulations- oder Sperrlage, die zweite Gürtellage 8 und die dritte Gürtellage 9 sind die sogenannten Arbeitslagen. Die breiteste Gürtellage ist die zweite Gürtellage 8, welche demnach die erste Gürtellage 7 komplett überdeckt. Die dritte Gürtellage 9 ist schmaler als die zweite Gürtellage 8 und ist somit etwas breiter als oder gleich breit wie die erste Gürtellage 7. Die vierte Gürtellage 10 weist in der Regel die geringste Breite auf. Sämtliche Gürtellagen 7, 8, 9, 10 bestehen aus in eine Gummimischung, der Gürtelgummierung, eingebetteten Festigkeitsträgern aus Stahlkord, beispielsweise Stahlkord der Konstruktion 3 x 0,2 mm + 6 x 0,35 mm, die innerhalb jeder Lage einen bestimmten Kordabstand zueinander aufweisen. Selbstverständlich können in den Gürtellagen auch Stahlkorde anderer Konstruktionen eingesetzt werden.

Die Breite der Gürtellagen 7, 8, 9, 10 wird in axialer Richtung (aR) bestimmt.

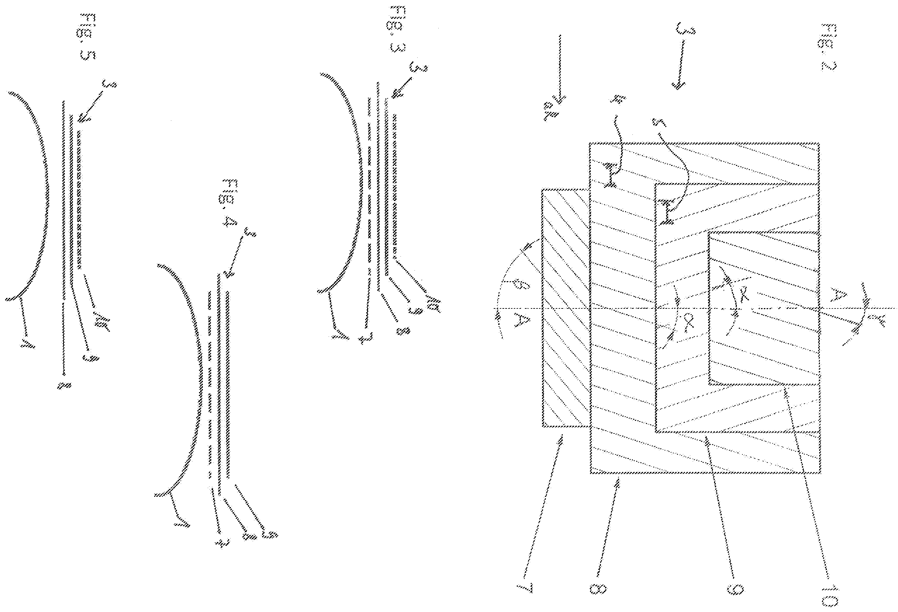

Wie Fig. 2 zeigt, verlaufen die Stahlkorde in jeder der Gürtellagen 7, 8, 9 und 10 jeweils parallel zueinander und schließen mit der durch die Linie A-A angedeuteten Umfangsrichtung des Reifens die Winkel α, β und γ ein. Die Neigung der Stahlkorde zur Umfangsrichtung in den einzelnen Gürtellagen 7, 8, 9, 10, beginnend bei der radial innersten Gürtellage 7, ist derart, dass die Abfolge RRLR (Rechts-Rechts-Links-Rechts) oder RRLL (Rechts-Rechts-Links-Links) vorliegt. Der Winkel β, den die Stahlcorde der ersten Gürtellage 7 mit der Umfangsrichtung A-A einschließen, ist größer als 45°, die Winkel α, den die Stahlkorde in der zweiten und dritten Gürtellage 8, 9 mit der Umfangsrichtung A-A einschließen, beträgt zwischen 15° und 30°, hier etwa 18°, wobei die Festigkeitsträger der zweiten Gürtellage 8 gegenläufig zu den Festigkeitsträgern der dritten Gürtellage 9 steigen. Der Winkel γ, den die Stahlkorde in der vierten Gürtellage 10 mit der Umfangsrichtung A-A einschließen, wird ebenfalls zwischen 15° und 30°, hier etwa 18° gewählt.

Erfindungsgemäß weist die dritte Gürtellage 9, welche die radial äußere und schmalere Arbeitslage ist, einen Stahlkordabstand 5 größer 1,00mm, hier etwa 1,4mm, auf. Die zweite Gürtellage 8, welche die radial innere und breitere Arbeitslage ist, weist einen Stahlkordabstand 4 kleiner 1,00mm, hier zwischen 0,5 und 0,8mm, auf. Der Unterschied im Stahlkordabstand 4, 5 zwischen der radial äußeren Arbeitslage 9 und der radial inneren Arbeitslage 8 ist größer 0,2mm, wobei der Stahlkordabstand je 100mm Gürtelbreite wie folgt definiert ist: (100mm - Anzahl der Stahlkorde * Durchmesser eines Stahlkordes) / Anzahl der Stahlkorde.

Die Fig.3 zeigt eine Gürtellagenanordnung eines NFZ-Luftreifens im Querschnitt. Radial außen auf der Karkasse 1 ist der Gürtel 3 angeordnet. Der Gürtel 3 weist 4 Lagen auf: die 1. Gürtellage 7 ist radial innen angeordnet und hat die Funktion einer Sperrlage. Die 2. und 3. Gürtellage sind die beiden Arbeitslagen, welche gemäß der Beschreibung der Arbeitslagen 8, 9 der Fig.2 aufgebaut sind. Radial außen wird die 3. Gürtellage 9 von der 4. Gürtellage 10, der sogenannten Schutzlage abgedeckt.

Die Fig.4 zeigt eine weitere Gürtellagenanordnung eines NFZ-Luftreifens im Querschnitt. Der in der Fig.4 gezeigte Gürtel 3 unterscheidet sich dadurch von dem in der Fig.3 gezeigten Gürtel, dass keine Schutzlage 10 angeordnet ist.

Die Fig.5 zeigt eine wiederum weitere Gürtellagenanordnung eines NFZ-Luftreifens im Querschnitt. Der in der Fig.5 gezeigte Gürtel 3 unterscheidet sich dadurch von dem in der Fig.3 gezeigten Gürtel, dass keine Sperrlage 7 angeordnet ist.

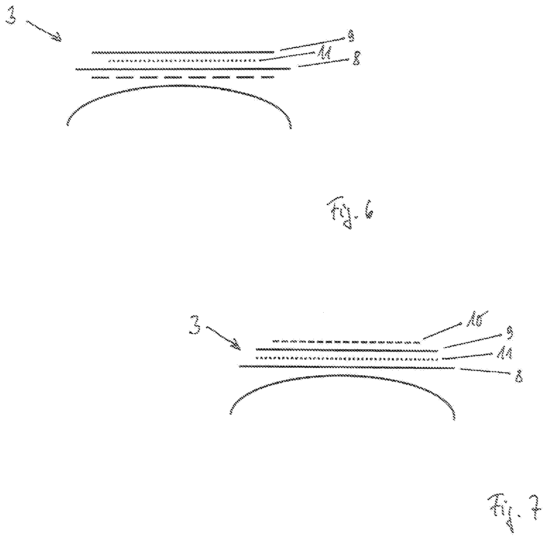

Die Fig.6 zeigt eine wiederum weitere Gürtellagenanordnung eines NFZ-Luftreifens im Querschnitt. Der in der Fig.6 gezeigte Gürtel 3 unterscheidet sich dadurch von dem in der Fig.4 gezeigten Gürtel darin, dass zusätzlich zwischen den Arbeitslagen 8, 9 eine 0°-Gürtellage 11 angeordnet ist.

Die Fig.7 zeigt eine wiederum weitere Gürtellagenanordnung eines NFZ-Luftreifens im Querschnitt. Der in der Fig.7 gezeigte Gürtel 3 unterscheidet sich dadurch von dem in der Fig.5 gezeigten Gürtel darin, dass zusätzlich zwischen den Arbeitslagen 8, 9 eine 0°-Gürtellage 11 angeordnet ist.

### Bezugszeichenliste

- 1: Karkasse
- 2: Innenschicht
- 3: Gürtel
- 4: Stahlkordabstand
- 5: Stahlkordabstand
- 6: Laufstreifen
- 7: 1. Gürtellage (Sperrlage)
- 8: 2. Gürtellage (radial innere Arbeitslage)
- 9: 3. Gürtellage (radial äußere Arbeitslage)
- 10: 4. Gürtellage (Schutzlage)
- 11: 0°-Gürtellage

alpha (α) - Winkel
beta (β) - Winkel
gamma (γ) - Winkel

## Patentansprüche

1. Nutzfahrzeugluftreifen in Radialbauart mit einer Karkasse (1) und einem Gürtel (3), welcher zwei Gürtellagen (8, 9) mit Festigkeitsträgern aus Stahlkord in Funktion von sogenannten Arbeitslagen aufweist, wobei die Stahlkorde jeder Arbeitslage (8, 9) mit einem bestimmten Stahlkordabstand (4, 5) jeweils parallel zueinander verlaufen, wobei die Neigung der Stahlkorde in Bezug zur Umfangsrichtung (A-A) der radial inneren Arbeitslage (8) gegenläufig zur Neigung der Stahlkorde der radial äußeren Arbeitslage (9) ist und wobei die Stahlkorde der beiden Arbeitslagen (8, 9) einen Winkel α zwischen 15° und 30° mit der Umfangsrichtung (A-A) einschließen, **dadurch gekennzeichnet, dass** die radial äußere Arbeitslage (9) einen Stahlkordabstand (5) von etwa 1,2 bis 1,4mm und die radial innere Arbeitslage (8) einen Stahlkordabstand (4) zwischen 0,5mm und 0,8mm aufweist und dass der Unterschied des Stahlkordabstandes (4, 5) zwischen der radial äußeren Arbeitslage (9) und der radial inneren Arbeitslage (8) > 0,2mm ist, wobei der Stahlkordabstand (4, 5) je 100mm Gürtelbreite wie folgt definiert ist: (100mm - Anzahl der Stahlkorde * Durchmesser eines Stahlkordes) / Anzahl der Stahlkorde.

2. Nutzfahrzeugluftreifen nach Anspruch 1, **dadurch gekennzeichnet, dass** zwischen der Karkasse (1) und der radial inneren Arbeitslage (8) eine weitere Gürtellage (7) mit Festigkeitsträgern aus Stahlkord in Funktion einer Sperrlage angeordnet ist, wobei die Festigkeitsträger dieser Sperrlage mit der Umfangsrichtung (A-A) einen Winkel β > 45° einschließen.

3. Nutzfahrzeugluftreifen nach einem oder mehreren der vorangehenden Ansprüche, **dadurch gekennzeichnet, dass** radial außen in Bezug auf die radial äußere Arbeitslage (9) eine zusätzliche Gürtellage (10) in Funktion einer sogenannten Schutzlage angeordnet ist.

4. Nutzfahrzeugluftreifen nach einem oder mehreren der vorangehenden Ansprüche, **dadurch gekennzeichnet, dass** zwischen den Arbeitslagen (8, 9) eine weitere Gürtellage (11) angeordnet ist, deren Festigkeitsträger aus Stahlkord in etwa 0° mit der Umfangsrichtung (A-A) einschließen.

## Claims

1. Commercial vehicle pneumatic tyre of a radial type of construction, comprising a carcass (1) and a breaker belt (3), which has two belt plies (8, 9) with reinforcing elements of steel cord functioning as so-called working plies, the steel cords of each belt ply (8, 9) respectively running parallel to one another with a certain steel cord spacing (4, 5), the inclination of the steel cords with respect to the circumferential direction (A-A) of the radially inner working ply (8) being opposite to the inclination of the steel cords of the radially outer working ply (9) and the steel cords of the two working plies (8, 9) forming an angle α of between 15° and 30° with the circumferential direction (A-A), **characterized in that** the radially outer working ply (9) has a steel cord spacing (5) of approximately 1.2 to 1.4 mm and the radially inner working ply (8) has a steel cord spacing (4) of between 0.5 mm and 0.8 mm and **in that** the difference in the steel cord spacing (4, 5) between the radially outer working ply (9) and the radially inner working ply (8) is > 0.2 mm, the steel cord spacing (4, 5) per 100 mm of belt width being defined as follows: (100mm - number of steel cords * diameter of a steel cord)/number of steel cords.

2. Commercial vehicle pneumatic tyre according to Claim 1, **characterized in that** a further belt ply (7) with reinforcing elements of steel cord functioning as a barrier ply is arranged between the carcass (1) and the radially inner working ply (8), the reinforcing elements of this barrier ply forming an angle β of > 45° with the circumferential direction (A-A).

3. Commercial vehicle pneumatic tyre according to one or more of the preceding claims, **characterized in that** an additional belt ply (10) functioning as a so-called protective ply is arranged radially outside with respect to the radially outer working ply (9).

4. Commercial vehicle pneumatic tyre according to one or more of the preceding claims, **characterized in that** a further belt ply (11) of which the reinforcing elements of steel cord form approximately 0° with the circumferential direction (A-A) is arranged between the working plies (8, 9).

## Revendications

1. Pneumatique pour véhicules utilitaires de type radial avec une carcasse (1) et une ceinture (3), qui présente deux couches de ceinture (8, 9) avec des éléments de résistance en cordes d'acier faisant fonction de couches de travail, dans lequel les cordes d'acier de chaque couche de travail (8, 9) sont chaque fois disposées parallèlement l'une à l'autre avec une distance déterminée (4, 5) entre les cordes d'acier, dans lequel l'inclinaison des cordes d'acier par rapport à la direction périphérique (A-A) de la couche de travail radialement intérieure (8) est opposée à l'inclinaison des cordes d'acier de la couche de travail radialement extérieure (9) et dans lequel les cordes d'acier des deux couches de travail (8, 9) forment un angle α compris entre 15° et 30° avec la direction périphérique (A-A), **caractérisé en ce que** la couche de travail radialement extérieure (9) présente une distance entre cordes d'acier (5) d'environ 1,2 à 1,4 mm et la couche de travail radialement intérieure (8) présente une distance entre cordes d'acier (4) comprise entre 0,5 mm et 0,8 mm et **en ce que** la différence de la distance entre cordes d'acier (4, 5) entre la couche de travail radialement extérieure (9) et la couche de travail radialement intérieure (8) est > 0,2 mm, dans lequel la distance entre cordes d'acier (4, 5) par 100 mm de largeur de ceinture est définie comme suit: (100 mm - nombre des cordes d'acier * diamètre d'une corde d'acier)/nombre des cordes d'acier.

2. Pneumatique pour véhicules utilitaires selon la revendication 1, **caractérisé en ce qu'**une autre couche de ceinture (7) avec des éléments de résistance en cordes d'acier faisant fonction de couche d'arrêt est disposée entre la carcasse (1) et la couche de travail radialement intérieure (8), dans lequel les éléments de résistance de cette couche d'arrêt forment un angle β > 45° avec la direction périphérique (A-A).

3. Pneumatique pour véhicules utilitaires selon une ou plusieurs des revendications précédentes, **caractérisé en ce qu'**une couche de ceinture supplémentaire (10) faisant fonction de couche de protection est disposée radialement à l'extérieur par rapport à la couche de travail radialement extérieure (9).

4. Pneumatique pour véhicules utilitaires selon une ou plusieurs des revendications précédentes, **caractérisé en ce qu'**une autre couche de ceinture (11) est disposée entre les couches de travail (8, 9), dont les éléments de résistance en cordes d'acier forment un angle d'environ 0° avec la direction périphérique (A-A).
